# FASCICULE DE BREVET EUROPEEN

(11) **EP 2 344 382 B1**
(45) Date de publication et mention de la délivrance du brevet: **20.04.2016**
(21) Numéro de dépôt: 09753139.6
(22) Date de dépôt: 23.10.2009
(51) Int. Cl.: B64D 29/00, B64D 29/08, B64D 33/02, B64D 29/06

(54) **STRUCTURE D'ENTRÉE D'AIR DE NACELLE**
GONDELLUFTEINLASSSTRUKTUR
NACELLE AIR INTAKE STRUCTURE

(30) Priorité: 13.11.2008 FR 0806315
(43) Date de publication de la demande: 20.07.2011
(73) Titulaire: Aircelle, 76700 Gonfreville l'Orcher (FR)
(72) Inventeur: JORET, Jean-Philippe, F-27210 Beuzeville (FR); VAUCHEL, Guy Bernard, F-76600 Le Havre (FR)
(74) Mandataire: Gaillarde, Frédéric F. Ch.
(86) Numéro de dépôt international: PCT/FR2009/001245
(87) Numéro de publication internationale: WO 2010/055220

(56) Documents cités:
- EP-A- 0 918 149
- FR-A- 2 757 823
- FR-A- 2 906 568

## Description

L'invention concerne une nacelle pour turboréacteur.

D'une façon générale, une nacelle d'aéronef présente une structure comprenant une structure d'entrée d'air, une structure médiane et une section aval. On entend ici par le terme « aval » la direction correspondant au sens du flux d'air froid pénétrant dans le turboréacteur. Le terme « amont » désigne la direction opposée.

La structure d'entrée d'air comprend au moins un panneau externe, au moins un panneau interne et une lèvre d'entrée d'air présentant une paroi interne destinée à être au contact du flux d'air pénétrant dans le turboréacteur.

La structure médiane, quant à elle, est destinée à entourer une soufflante du turboréacteur. Ladite structure est rattachée à la structure d'entrée d'air de manière fixe par le ou les panneaux internes et de manière mobile par le ou les panneaux externes de manière à assurer une continuité aérodynamique.

Ainsi, la nacelle comprend une structure amont comportant une lèvre d'entrée d'air et le ou les panneaux externes, ladite structure étant mobile par rapport à une structure fixe comportant le ou les panneaux internes.

Une telle structure amont mobile permet d'avoir accès aux équipements logés à l'intérieur de la nacelle pour réaliser la maintenance de ces derniers.

Ainsi, en condition de vol, la structure d'entrée d'air est en position de fermeture, à savoir la structure amont mobile est fixée sur le ou les panneaux internes et sur la structure médiane.

En position d'ouverture de la structure d'entrée d'air, à savoir lors du retrait en position amont de la lèvre d'entrée d'air et du ou des panneaux externes, l'opérateur a accès à l'intérieur de la nacelle. Il peut donc réaliser les opérations de maintenance nécessaires.

Pour réaliser les opérations de maintenance sur les équipements logés à l'intérieur de la nacelle, on fait coulisser la structure amont mobile grâce à des moyens de guidage.

Généralement, de tels moyens de guidage sont sous la forme d'un système de rails.

Par ailleurs, le ou les panneaux internes peuvent être dotés d'au moins une virole acoustique, notamment une structure en nid d'abeille, de sorte d'absorber les nuisances acoustiques issues du fonctionnement du turboréacteur.

Dans le cas où la virole acoustique n'a pas une structure compatible au feu, il faut placer une cloison étanche de protection contre le feu en aval de sa structure.

Or, afin d'assurer un recul suffisant de la structure d'entrée d'air lors de son ouverture pour atteindre les pièces à l'intérieur de la nacelle, la structure des moyens de guidage doit déborder vers l'amont de la virole acoustique, ce qui rend impossible l'agencement d'une telle protection contre le feu constante en périphérie aval de ladite virole. Le document FR2757823, qui est considéré l'état de la technique plus proche, montre une nacelle connue.

Un but de la présente invention est de fournir une nacelle comprenant uns structure d'entrée d'air ne présentant pas les inconvénients précités.

Un autre but de la présente invention est de proposer une nacelle comprenant une structure d'entrée d'air munie d'une structure résistante au feu pour protéger le ou les panneaux internes quelque soit les dimensions et la forme des moyens de guidage du ou des panneaux externes de la structure d'entrée d'air.

A cet effet, l'invention propose une nacelle comprenant une structure d'entrée d'air apte à canaliser un flux d'air vers une soufflante de turboréacteur, ladite structure comprenant au moins un panneau interne et un panneau externe, le panneau externe étant apte à être déplacé par des moyens de guidage de manière à ouvrir la structure d'entrée d'air, caractérisé en ce qu'elle comprend, en outre, des moyens de protection contre le feu du panneau interne, lesdits moyens étant aptes à être déplacés tout ou en partie lors de l'ouverture de la structure d'entrée d'air.

Grace à la présente invention, les moyens de guidage du panneau externe ne sont alors plus un obstacle à l'agencement d'une structure de protection contre le feu des panneaux internes de la structure d'entrée d'air.

Selon d'autres caractéristiques de l'invention, la structure d'entrée d'air de l'invention comporte l'une ou plusieurs des caractéristiques optionnelles suivantes considérées seules ou selon toutes les combinaisons possibles :
- les moyens de protection contre le feu comprennent au moins une cloison conformée de façon à séparer le panneau interne des moyens de guidage du panneau externe lorsque la structure d'entrée d'air est fermée ;
- la cloison s'étend vers l'amont du panneau interne ;
- la cloison est rapportée, à l'une de ses extrémités, à une partie amont du panneau externe et, à l'extrémité opposée, à l'extrémité aval du panneau interne ;
- la cloison est apte à être fixée de manière amovible sur une structure de cloison de protection feu arrière 16 ;
- la cloison comprend des moyens de centrage aptes à être fixés sur des éléments de centrage correspondants ménagés sur un carter de soufflante;
- la cloison comprend deux parties distinctes, une partie aval fixe destinée à être fixée sur le panneau interne et une partie amont mobile destinée à être fixée sur le panneau externe et apte à être déplacée lors de l'ouverture de la structure d'entrée d'air ;
- un joint d'étanchéité est intercalé entre les deux parties de la cloison lorsque la structure d'entrée d'air est fermée ;
- la cloison est métallique.

D'autres caractéristiques, buts et avantages de la présente invention apparaîtront à la lecture de la description détaillée qui va suivre, selon des modes de réalisation donnés à titre d'exemples non limitatifs, et faite en référence aux dessins annexés sur lesquels :
- Les figures 1 et 2 sont des vues en coupe longitudinale partielle d'un premier mode de réalisation d'une nacelle selon la présente invention comprenant une structure d'entrée d'air respectivement en position de fermeture et en position d'ouverture complète ;
- La figure 3 est une section transversale de la nacelle des figures 1 et 2 ;
- Les figures 4 et 5 sont des vues en coupe longitudinale partielle d'un second mode de réalisation d'une nacelle de la présente invention comprenant une structure d'entrée d'air respectivement en position de fermeture et en position d'ouverture complète.

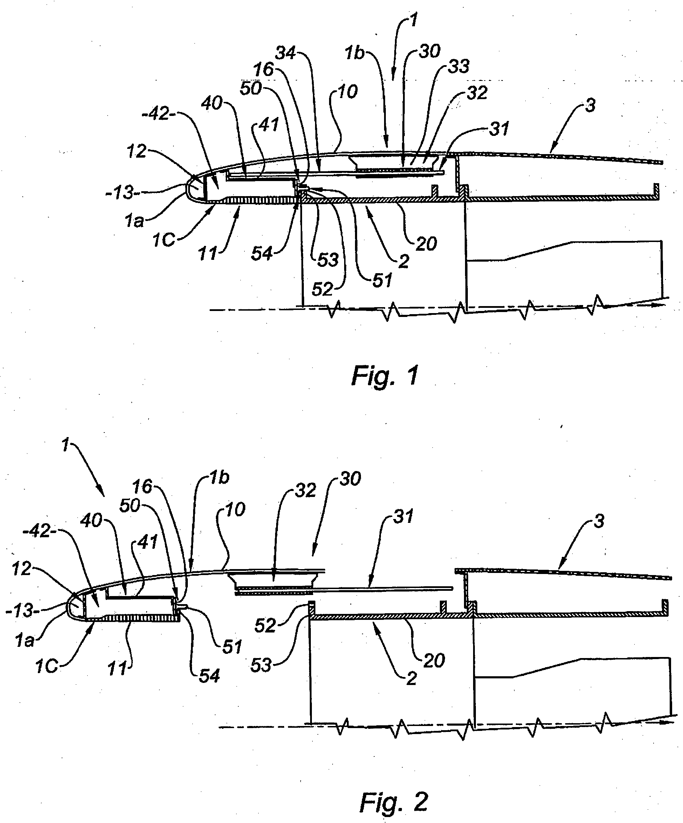

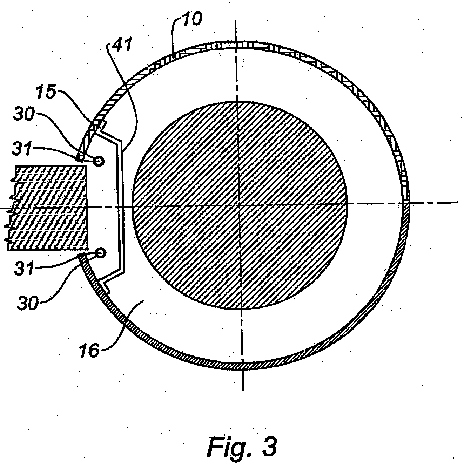

Comme illustré sur les figures 1 à 3, une nacelle possède une structure comprenant une structure d'entrée d'air 1 en amont, une structure médiane 3 en aval d'une structure 2 de carter de soufflante entourant un corps de moteur et et une section aval (non représentée) abritant généralement un système d'inversion de poussée.

La structure d'entrée d'air 1 se divise en trois zones. La première zone la plus en amont est une lèvre d'entrée d'air 1a adaptée pour permettre la captation optimale vers le turboréacteur de l'air nécessaire à l'alimentation de la soufflante et des compresseurs internes du turboréacteur. La seconde zone est une section 1 b reliée à une extrémité de la lèvre d'entrée d'air 1 a comprenant au moins un panneau externe 10. La troisième zone est une section 1c reliée à l'autre extrémité de la lèvre d'entrée d'air 1a et comportant au moins un panneau interne 11 destiné à canaliser convenablement l'air vers les aubes (non représentées) de la soufflante.

La structure d'entrée d'air 1 comporte également une cloison 12 séparant la lèvre d'entrée d'air 1a du reste de ladite structure 1. Cette cloison 12 permet ainsi de délimiter une cavité étanche 13 au sein de laquelle des équipements, tels que des équipements de dégivrage, par exemple de type pneumatique ou électrique, sont disposés pour assurer le fonctionnement de la nacelle.

La structure médiane 3 comprend, quant à elle, un carter de moteur rattaché, à une extremité, à l'éxtrémité aval de la structure 2 du carter de soufflante 20 et, à l'extrémité opposée, à la section aval.

La structure médiane 3 est, par ailleurs, rattachée à une extrémité amont à la structure d'entrée d'air 1 par l'intermédiaire de la structure 2 du carter de soufflante 20 de manière à assurer une continuité aérodynamique.

Concernant le panneau interne 11 de la structure d'entrée d'air 1, il comprend une virole acoustique destinée à atténuer les nuisances sonores dues au fonctionnement du turboréacteur et aux vibrations de la structure. Cette virole acoustique est typiquement constituée d'une structure en nid d'abeille ou de toute autre structure connue de l'homme du métier permettant d'absorber les nuisances sonores.

La lèvre d'entrée d'air 1a est fixée au panneau externe 10 et au panneau interne 11 de manière à former une pièce unique démontable, dénommée structure amont mobile. A cet effet, la lèvre d'entrée d'air 1a peut être intégrée au panneau externe 10 et au panneau interne 11.

Ainsi, la structure d'entrée d'air 1 est fixée de manière amovible sur une structure fixe comportant la structure 2 de carter 20 et la structure médiane 3.

La figure 1 illustre la structure d'entrée d'air 1 en position de fermeture, les panneaux externe 10 et interne 11 assurant la continuité aérodynamique de l'extérieur de la nacelle tandis que la figure 2 correspond à la structure d'entrée d'air 1 en position d'ouverture complète permettant ainsi d'avoir accès aux équipements logés à l'intérieur de la nacelle pour réaliser leur maintenance.

Afin de permettre à la structure amont mobile de reculer en amont de la nacelle et ainsi d'ouvrir la structure d'entrée d'air 1 comme illustré sur la figure 2, cette dernière est typiquement dotée de moyens de guidage 30 aptes à permettre un coulissement axial du panneau externe 10 vers l'amont de la nacelle.

Selon un mode de réalisation, les moyens de guidage 30 comprennent un système de rails 31 et des moyens de montage 32 mobiles du panneau externe 10 sur le système de rails 31.

Les moyens de montage 32 ainsi que le système de rails 31 peuvent avoir n'importe quelles formes aptes à permettre un déplacement longitudinal sensiblement rectiligne des moyens de montage 32 par rapport au système de rails 31.

Le mode de réalisation représenté aux figures 1 à 3 illustre un exemple non limitatif d'un système de rails 31 qui peut s'étendre de l'extrémité aval de la structure 2 de carter de soufflante 2 vers l'amont au delà de l'interface entre le panneau interne 11 et le carter 20 sur une grande partie de la longueur du panneau interne 11.

Une glissière 33 fixée à une de ses extrémités au panneau externe 10 est apte à coulisser de manière longitudinale sur le rail 34 fixé sur la structure fixe par rapport à l'axe de la nacelle de sorte d'entraîner la structure amont mobile en translation.

A titre d'autres exemples non limitatifs de moyens de guidage 30, on peut citer des coulisseaux sur des rails, un système de patins à rouleaux aptes à coopérer avec un rail correspondant ainsi qu'un axe longitudinal apte à coulisser à travers une ouverture correspondante.

Selon l'invention, la structure d'entrée d'air 1 comprend, en outre, des moyens 40 de protection contre le feu du panneau interne 11 aptes à être déplacés avec la structure amont mobile lorsque le panneau externe 10 coulisse axialement grâce aux moyens de guidage 30 pour assurer l'ouverture de la structure d'entrée d'air 1.

Les moyens de guidage 30 du panneau externe 10 et, par conséquent, de la structure amont mobile ne sont alors plus un obstacle à l'agencement d'uns structure résistante au feu destinée à protéger le ou les panneaux internes 11 de la structure d'entrée d'air 1.

Ces moyens de protection contre le feu 40 comprennent une cloison 41 conformée de façon à séparer le panneau interne 11 des moyens de guidage 30 du panneau externe 10 lorsque la structure d'entrée d'air 1 est en position de fermeture.

Cette cloison 41 s'étend vers l'amont de la structure d'entrée d'air 1 au delà de l'interface entre le panneau interne 11 et le carter 20, en vis-à-vis de la cloison 12 usuelle de la lèvre d'étanchéité 1a.

Plus précisément, cette cloison 41 est rapportée à son extrémité amont à une partie amont du panneau externe 10 en amont de l'extrémité amont des moyens de guidage 30 et, plus précisément, du système de rails 31 par l'intermédiaire d'une bride de fixation 15 fixée sur le panneau externe 10 ou tout autre moyen connu de l'homme du métier.

A son extrémité aval, elle est rapportée à l'extrémité aval du panneau interne 11 en amont de l'interface avec la structure fixe par l'intermédiaire d'une bride de fixation fixée sur le panneau interne 11 ou tout autre moyen connu de l'homme du métier.

Plus précisément, la cloison de protection feu 41 est fixée à son extrémité aval par tout moyen connu à une extrémité d'une cloison de protection feu arrière 16 s'étendant dans un plan perpendiculaire à l'axe longitudinal de la nacelle, cette cloison 16 étant fixée à son extrémité opposée au panneau interne 11.

Une variante de réalisation peut prévoir que la cloison de protection feu 41 et la cloison de protection feu arrière 16 forment une seule pièce.

Dans un mode de réalisation, la cloison de protection contre le feu 41 est métallique. Toutefois, d'autres types de cloison peuvent être proposés.

Avantageusement, grâce à une telle configuration de cloison 41 de protection contre le feu, le panneau interne 11 se trouve isolé des moyens de guidage 30 dans une cavité étanche 42 hors de la zone feu de la nacelle, cette cavité étant notamment délimitée par la cloison de protection contre le feu 41 et la cloison 12 usuelle de la lèvre d'entrée d'air 1 a lorsque la structure d'entrée d'air 1 est en position de fermeture.

La cloison de protection contre le feu 41 comprend, en outre, des moyens de centrage 50 complémentaires à la structure fixe de sorte de centrer de manière précise ladite cloison et, en conséquence, la structure amont mobile à la structure fixe.

Selon un mode de réalisation, la cloison 41 comprend un élément de centrage 51 rapporté à son extrémité aval et apte à se centrer sur un élément 52 correspondant fixé sur une bride 53 à l'extrémité amont du carter 20, ce qui permet d'assurer la continuité aérodynamique entre l'extrémité aval du panneau interne 11 et l'extrémité amont du carter 20 lorsque la structure d'entrée d'air 1 est en position de fermeture

Ces éléments de centrage sont tous les éléments connus de l'homme du métier. A cet effet, on peut citer, par exemple, des moyens de centrage rigides, tels que des pions de centrage aptes à coopérer avec des alésages correspondants, et/ou souples pour assurer une continuité structurelle, tels qu'une languette élastique. On peut citer également les systèmes de centrage par galet comme, par exemple, ceux décrits dans la demande FR 08/03558.

Ces éléments de centrage 51,52 permettent d'assurer une continuité aérodynamique la plus pure possible.

Un joint périphérique 54 indifféremment disposé à l'interface sur l'un ou l'autre de la bride du carter 20 ou de la cloison de protection feu arrière 16 assure une étanchéité entre la cavité contenant le système de rails 31 et l'interne du panneau interne 11. Tout joint connu de l'homme du métier peut être intercalé entre la cloison feu arrière 16 ou la bride de fixation de la cloison de protection feu 41 sur le panneau interne 11 et le carter 20.

Une variante de réalisation de la présente invention prévoit des nacelles comprenant plusieurs moyens de guidage 30 répartis autour de la virole acoustique du panneau interne 11.

Dans ce cas, une cloison de protection feu 41 telle que décrite précédemment en relation avec les figures 1 à 3 pourra être agencée entre chacun des moyens de guidage 30 et la virole acoustique du panneau interne 11.

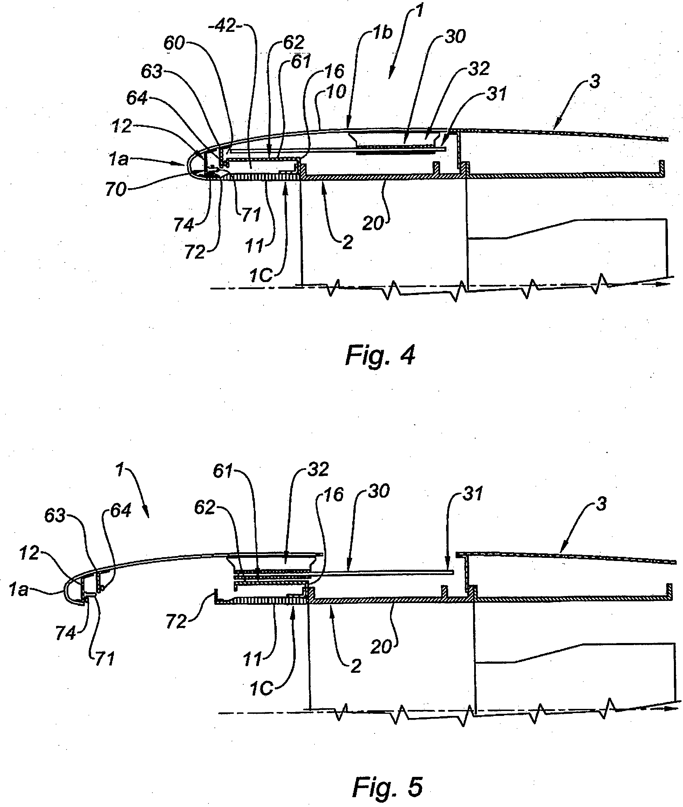

Selon un second mode de réalisation de la nacelle représenté aux figures 4 et 5, la structure d'entrée d'air 1 comprend des moyens 60 de protection contre le feu du panneau interne 11 aptes à être déplacés en partie lors de son ouverture.

En effet, dans ce mode de réalisation, le panneau interne 11 est fixé à son extrémité aval à une extrémité amont du carter 20 formant avec le carter 20 la structure fixe de la nacelle. Il ne fait plus partie de la structure amont mobile de cette dernière.

Par conséquent, une cloison 61 de protection contre le feu du panneau interne 11 similaire à la cloison telle que decrite aux figures 1 et 2 est utilisée à la différence qu'elle présente deux parties, à savoir une partie aval 62 fixée à son extrémité aval au panneau interne 11 et plus précisément sur la cloison de protection feu arrière 16 appartenant, ainsi, à la structure fixe et une partie amont 63 fixée sur une partie amont du panneau externe 10 appartenant ainsi à la structure amont mobile.

La partie amont 63 de la cloison 61 est alors apte à être déplacée lorsque le panneau externe 10 coulisse axialement pour ouvrir la structure d'entrée d'air 1, tel qu'illustré sur la figure 5.

Par ailleurs, dans ce second mode de réalisation, les moyens de centrage 50 entre l'extrémité aval de la cloison 41 de protection contre le feu et le carter 20 tel que précités en référence aux figures 1 et 2 sont supprimés.

La zone de jonction entre les deux parties amont et aval 62,63 de la cloison de protection contre le feu 61 est située au niveau de l'extrémité amont du panneau interne 11.

Pour assurer l'étanchéité entre ces deux parties, en position de fermeture de la structure d'entrée d'air 1, et, par conséquent, rendre étanche la cavité 42 hors zone feu dans laquelle se trouve le panneau interne 11, un joint 64 est intercalé entre les deux parties 62,63 de la cloison 61 de protection contre le feu. Il est disposé sur l'une ou l'autre des deux parties 62, 63 de la cloison 61. Bien évidemment, sa constitution est choisie pour tenir au feu.

Par ailleurs, afin de fixer de manière amovible la structure amont mobile à la structure fixe, l'extrémité aval de la lèvre d'entrée d'air 1 a et l'extrémité amont du panneau interne 11 sont fixés ensemble par l'intermédiaire de moyens de centrage 70 similaires à ceux décrits en référence aux figures 1 et 2.

Ceci permet d'assurer la continuité aérodynamique entre la structure amont mobile et la structure fixe lorsque la structure d'entrée d'air 1 est en position de fermeture.

Selon le mode de réalisation illsutré sur les figures 4 et 5, la cloison 12 usuelle de la lèvre d'entrée d'air 1a comporte, ainsi, un élément de centrage 71 rapporté à son extrémité aval apte à se centrer sur un élément 72 correspondant fixé sur une bride à l'extrémité amont du panneau interne 11.

Par ailleurs, un joint périphérique 64 indifféremment disposé à l'interface sur l'un ou l'autre de la bride du panneau interne 11 ou des moyens de centrage 70 de la cloison 12 usuelle de la lèvre d'entrée d'air 1 a assure une étanchéité entre la cavité contenant les moyens de guidage 30 et l'interne du panneau interne 11.

Bien évidemment, l'invention ne se limite pas aux seules formes de réalisation de cette nacelle décrites ci-dessus à titre d'exemples mais elle embrasse au contraire toutes les variantes possibles.

## Revendications

1. Nacelle comprenant une structure d'entrée d'air (1) apte à canaliser un flux d'air vers une soufflante de turboréacteur, ladite structure (1) comprenant au moins un panneau interne (11) et un panneau externe (10), le panneau externe (10) étant apte à être déplacé par des moyens de guidage (30) de manière à ouvrir la structure d'entrée d'air (1), **caractérisé en ce qu'**elle comprend, en outre, des moyens (40,60) de protection contre le feu du panneau interne (11) comprenant au moins une cloison (41,61) conformée de façon à séparer le panneau interne (11) des moyens de guidage (30) du panneau externe (10) lorsque la structure d'entrée d'air est fermée, mobiles tout ou en partie lors de l'ouverture de la structure d'entrée d'air (1).

2. Nacelle selon la revendication 1 **caractérisée en ce que** la cloison (41,61) s'étend vers l'amont du panneau interne (11).

3. Nacelle selon la revendication 2 **caractérisée en ce que** la cloison (41,61) est rapportée, à l'une de ses extrémités, à une partie amont du panneau externe (10) et, à l'extrémité opposée, à l'extrémité aval du panneau interne (11).

4. Nacelle selon l'une des revendications 1 à 3 **caractérisée en ce que** la cloison (41) est apte à être fixée de manière amovible sur une structure de cloison de protection feu arrière (16).

5. Nacelle selon la revendication 4 **caractérisée en ce que** la cloison (41) comprend des moyens de centrage (50) aptes à être fixés sur des éléments de centrage (52) correspondants ménagés sur un carter (20) de soufflante.

6. Nacelle selon l'une des revendications 1 à 3 **caractérisée en ce que** la cloison (61) comprend deux parties distinctes, une partie aval (62) fixe destinée à être fixée sur le panneau interne (11) et une partie amont (63) mobile destinée à être fixée sur le panneau externe (10) et apte à être déplacée lors de l'ouverture de la structure d'entrée d'air (1).

7. Nacelle selon la revendication 6 **caractérisée en ce qu'**un joint d'étanchéité (64) est intercalé entre les deux parties (62,63) de la cloison (61) lorsque la structure d'entrée d'air (1) est fermée.

8. Nacelle selon l'une des revendications 1 à 7 **caractérisée en ce que** la cloison (41,61) est métallique.

## Patentansprüche

1. Gondel, umfassend eine Lufteinlassstruktur (1), die ausgelegt ist, um einen Luftstrom hin zu einem Gebläse eines Triebwerks zu kanalisieren, wobei die Struktur (1) mindestens eine innere Platte (11) und eine äußere Platte (10) umfasst, wobei die äußere Platte (10) ausgelegt ist, um durch Führungsmittel (30) so verschoben zu werden, dass sie eine Lufteinlassstruktur (1) öffnet, **dadurch gekennzeichnet, dass** sie außerdem Mittel (40, 60) zum Schutz gegen Feuer der inneren Platte (11) umfasst, umfassend mindestens eine Trennwand (41, 61), die so geformt ist, dass sie die innere Platte (11) der Führungsmittel (30) von der äußeren Platte (10) trennt, wenn die Lufteinlassstruktur geschlossen ist, die bei der Öffnung der Lufteinlassstruktur (1) ganz oder teilweise beweglich sind.

2. Gondel nach Anspruch 1, **dadurch gekennzeichnet, dass** sich die Trennwand (41, 61) hin zur vorgelagerten Seite der inneren Platte (11) erstreckt.

3. Gondel nach Anspruch 2, **dadurch gekennzeichnet, dass** die Trennwand (41, 61) an einem ihrer Enden an einen vorgelagerten Teil der äußeren Platte und am gegenüber liegenden Ende an das nachgelagerte Ende der inneren Platte (11) aufgesetzt ist.

4. Gondel nach Anspruch 1 bis 3, **dadurch gekennzeichnet, dass** die Trennwand (41) ausgelegt ist, um auf unbewegliche Weise auf einer hinteren Trennwandstruktur zum Feuerschutz (16) befestigt zu sein.

5. Gondel nach Anspruch 4, **dadurch gekennzeichnet, dass** die Trennwand (41) Zentriermittel (50) umfasst, die ausgelegt sind, um auf entsprechenden Zentrierelementen (52) befestigt zu sein, die auf einem Gebläsegehäuse (20) angeordnet sind.

6. Gondel nach einem der Ansprüche 1 bis 3, **dadurch gekennzeichnet, dass** die Trennwand (61) zwei verschiedene Teile umfasst, einen festen nachgelagerten Teil (62), der dazu bestimmt ist, um auf der inneren Platte (11) befestigt zu sein, und einen beweglichen vorgelagerten Teil (63), der dazu bestimmt ist, auf der äußeren Platte (10) befestigt zu sein und ausgelegt, um bei der Öffnung der Lufteinlassstruktur (1) verschoben zu werden.

7. Gondel nach Anspruch 6, **dadurch gekennzeichnet, dass** eine Dichtung (64) zwischen die beiden Teile (62, 63) der Trennwand (61) eingeschoben ist, wenn die Lufteinlassstruktur (1) geschlossen ist.

8. Gondel nach einem der Ansprüche 1 bis 7, **dadurch gekennzeichnet, dass** die Trennwand (41,61) metallisch ist.

## Claims

1. A nacelle comprising an air inlet structure (1) capable of channeling an air flow toward a turbojet engine fan, said structure (1) comprising at least one internal panel (11) and one external panel (10), the external panel (10) being capable of being displaced by guide means (30) so as to open the air inlet structure (1), **characterized in that** it further comprises fire protection means (40, 60) of the internal panel (11) comprising at least one partition wall (41, 61) shaped so as to separate the internal panel (11) from the guide means (30) of the external panel (10) when the air inlet structure is closed, said fire protection means being totally or partially movable at the opening of the air inlet structure (1).

2. The nacelle according to claim 1, **characterized in that** the partition wall (41, 61) extends upstream of the internal panel (11).

3. The nacelle according to claim 2, **characterized in that** the partition wall (41, 61) is attached, at one of its ends, to an upstream portion of the external panel (10) and, at the opposite end, to the downstream end of the internal panel (11).

4. The nacelle according to any of claims 1 to 3, **characterized in that** the partition wall (41) is capable of being removably fastened on a rear structure (16) of the fire protection partition wall.

5. The nacelle according to claim 4, **characterized in that** the partition wall (41) comprises centering means (50) capable of being fastened on corresponding centering elements (52) arranged on a fan casing (20).

6. The nacelle according to any of claims 1 to 3, **characterized in that** the partition wall (61) comprises two distinct portions, a fixed downstream portion (62) intended to be fastened on the internal panel (11) and a movable upstream portion (63) intended to be fastened on the external panel (10) et capable of being displaced at the opening of the air inlet structure (1).

7. The nacelle according to claim 6, **characterized in that** a sealing gasket (64) is interposed between the two portions (62, 63) of the partition wall (61) when the air inlet structure (1) is closed.

8. The nacelle according to any of claims 1 to 7, **characterized in that** the partition wall (41, 61) is metallic.
